# EUROPÄISCHE PATENTANMELDUNG

(11) **EP 4 718 294 A1**
(43) Veröffentlichungstag der Anmeldung: **01.04.2026**
(21) Anmeldenummer: 24203627.5
(22) Anmeldetag: 30.09.2024
(51) Int. Cl.: G06F 21/44, H04L 9/08, H04L 9/40, G06F 21/64

(54) **VERFAHREN UND KOMMUNIKATIONSGERÄT ZUR KRYPTOGRAPHISCH GESICHERTEN DATENÜBERMITTLUNG ZWISCHEN KOMMUNIKATIONSTEILNEHMERN**

(71) Anmelder: Siemens Aktiengesellschaft, 80333 München (DE)
(72) Erfinder: Adam, Alexander, 92637 Weiden (DE); Becker, Stefan, 91325 Adelsdorf (DE); Falk, Rainer, 85435 Erding (DE); Feist, Christian Peter, 80689 München (DE); Haasch, Axel, 91056 Erlangen (DE); Laurig, Frank, 92369 Sengenthal (DE); Palmin, Anna, 76187 Karlsruhe (DE); Seeger, Guido, 91083 Baiersdorf (DE); Sperl, Franz, 92526 Oberviechtach (DE)
(74) Vertreter: Siemens Patent Attorneys

(57) **Zusammenfassung**

Zur kryptographisch gesicherten Datenübermittlung authentisieren sich Kommunikationsteilnehmer (101-106) sich vor einem Aufbau einer Sitzung und erstellen gemeinsam einen kryptographischen Sitzungsschlüssel (230) erstellen oder nutzen einen vorab bereitgestellten kryptographischen Sitzungsschlüssel. Anhand des Sitzungsschlüssels (230) wird die Sitzung zwischen den Kommunikationsteilnehmern nach einer erfolgreichen Authentifizierung der Kommunikationsteilnehmer (101-106) kryptographisch gesichert aufgebaut. Für ein innerhalb der Sitzung zu verwendendes Verschlüsselungsverfahren wird zwischen den Kommunikationsteilnehmern ein Verschlüsselungsparameter (232) abgeglichen, anhand dessen eine kryptographische Verschlüsselungsfunktion (222) des Verschlüsselungsverfahrens angepasst wird. Dabei ist der Verschlüsselungsparameter für jeden Kommunikationsteilnehmer vorkonfiguriert und innerhalb der Sitzung unveränderlich. Bei einem Abgleich des Verschlüsselungsparameters (232) wird überprüft, ob dieser für die Kommunikationsteilnehmer (101-106) identisch vorkonfiguriert ist. Der Verschlüsselungsparameter (232) wird bei identischer Vorkonfigurierung zur Anpassung des Verschlüsselungsverfahrens übernommen, und zwischen den Kommunikationsteilnehmern (101-106) innerhalb der Sitzung übermittelte Daten werden entsprechend dem angepassten Verschlüsselungsverfahren kryptographisch gesichert.

## Beschreibung

Die vorliegende Erfindung betrifft ein Verfahren zur kryptographisch gesicherten Datenübermittlung, insbesondere zur Übermittlung von zeitkritischen Daten innerhalb eines Kommunikationssystems für ein industrielles Automatisierungssystem, zwischen Kommunikationsteilnehmern und ein Kommunikationsgerät, insbesondere ein Endgerät oder ein Vorschaltgerät für ein Endgerät, zur Durchführung des Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus EP 3 646 559 B1 ist ein Verfahren zur Überprüfung von innerhalb eines industriellen Automatisierungssystems mit mehreren Automatisierungszellen übermittelten Datagrammen bekannt, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

EP 4 283 925 B1 betrifft eine gesicherte Übermittlung zeitkritischer Daten innerhalb eines Kommunikationssystems, das mehrere lokale Netze, in dem Daten mittels Switching übermittelt werden, zumindest ein gegenüber den lokalen Netzen überlagertes Netz, in dem Daten mittels Routing übermittelt werden, und ein Gateway-System zur Anbindung des Kommunikationssystems an zumindest ein ungesichertes externes Netz umfasst. Netzwerkschicht-Kommunikation über das überlagerte Netz wird nur zwischen authentifizierten Systemkomponenten autorisiert. Switche authentifizieren jeweils angeschlossene Endgeräte und ordnen diese entsprechend einer jeweiligen Endgeräte-Identität einem physikalischen oder logischen lokalen Netz zu. Sicherungsschicht-Kommunikation wird innerhalb der lokalen Netze implizit aufgrund einer Zuordnung der jeweiligen Endgeräte zum selben lokalen Netz autorisiert. Kommunikation auf OSI-Schicht 3-7 zwischen Endgeräten unterschiedlicher lokaler Netze bzw. mit Endgeräten im ungesicherten externen Netz wird mittels Zero Trust-Proxies autorisiert, die jeweils einem lokalen Netz zugeordnet sind.

Aus EP 4 300 882 B1 ist eine gesicherte Übermittlung zeitkritischer Daten innerhalb eines Kommunikationssystems bekannt, das mehrere lokale Netze, die jeweils zumindest einen Switch und mehrere Endgeräte umfassen, eine Steuerungseinheit, die Funktionen mehrerer Switche und Endgeräte steuert, und ein der Steuerungseinheit zugeordnetes Steuerungsnetz umfasst, das von den lokalen Netzen separiert ist. Kommunikation innerhalb der lokalen Netze wird implizit aufgrund einer Zuordnung der jeweiligen Endgeräte zum selben lokalen Netz autorisiert. Jedem Endgerät ist ein Zero Trust-Adapter zugeordnet, der Statusinformationen des Endgeräts erfasst, die Statusinformationen über das Steuerungsnetz zur Auswertung an die Steuerungseinheit weiterleitet und das Endgerät gegenüber der Steuerungseinheit bzw. Kommunikationspartnern authentisiert. Die Steuerungseinheit ermittelt für die Endgeräte auf Grundlage der Statusinformationen jeweils eine Vertrauenskennzahl und wendet von der Vertrauenskennzahl abhängige Regeln zur Konfiguration bzw. für zulässige Kommunikationsbeziehungen der Endgeräte an.

Im Prior Art Journal 2019 #01 (ISBN 978-3-947591-04-6) ist auf Seite 64-68 beschrieben, einen Randomisierungsparameter, der für eine randomisierte Ausführung vom Programmcode verwendet wird, durch eine Projektierung oder eine Konfiguration vorzugeben. Dadurch kann beispielsweise bei einer Herstellung bzw. Inbetriebnahme bzw. Wartung des Gerätes ein geräteindividueller Randomisierungsparameter festgelegt werden. Auf diese Weise wird erreicht, dass ein Gerät wie ein industrielles Steuergerät oder ein loT-Gerät (Internet of Things) ein deterministisches Verhalten im laufenden Betrieb aufweist. Dazu wird ein Code Randomisierungsparameter verwendet, der auf dem Gerät konfigurierbar ist, beispielsweise bei der Herstellung oder durch den Anwender. Der Code Randomisierungsparameter kann direkt konfiguriert werden, oder er kann abhängig von mehreren Ursprungsrandomisierungsparametern gebildet werden, wie durch XOR Verknüpfung (exclusive OR/ausschließliches Oder) oder durch eine kryptographische Hash Funktion der verketteten Ursprungs-Randomisierungsparameter. Code Randomisierungsparameter können insbesondere Geräte-Randomisierungsparameter sein, die bei der Herstellung auf ein Gerät konfiguriert werden. Es können aber auch Projektierungs-Randomisierungsparameter sein, die als Teil der durch den Anwender eingespielten Projektierungsdaten festgelegt werden, oder auch Firmware-Randomisierungsparameter, die in der Firmware enthalten sind.

In vielen Anwendungsfällen werden nur allgemein akzeptierte Kryptographie-Algorithmen verwendet, die beispielsweise vom BSI (Bundesamt für Sicherheit in der Informationstechnik) oder NIST (National Institute of Standards and Technology) empfohlen werden. Dennoch kann es in manchen Fällen vorteilhaft sein, einen modifizierten Kryptographie-Algorithmus zu verwenden. Dadurch können automatisierte Angriffe, die beispielsweise auf Reverse-Engineering, Schwachstellen-Analysen oder Seitenkanalangriffen basieren, erschwert werden, insbesondere wenn Tools, die auf weit verbreitete Kryptographie-Algorithmen ausgelegt sind, nicht direkt anwendbar sind.

Für eine Authentisierung von Teilnehmern in Mobilfunknetzen können Kryptographie-Algorithmen verwendet werden, bei denen ein Mobilfunkprovider eine für ihn spezifische Algorithmusvariante durch Festlegen des OP-Parameters (Operator Variant Algorithm Configuration) festlegen kann. Dadurch wird ermöglicht, dass ein Mobilfunkprovider einen für ihn spezifischen Kryptographie-Algorithmus zur Authentisierung aufwandsarm festlegen und nutzen kann. Der Mobilfunkprovider muss lediglich den OP-Parameter auswählen, um eine spezifische Variante des Kryptographie-Algorithmus zu schaffen. Außerdem können Tweakable Block Ciphers (siehe https://en.wikipedia.org/wiki/Block_cipher, Abschnitt "Tweakable block ciphers") verwendet werden, bei denen als Eingabeparameter zusätzlich zu Schlüssel und Klartext ein Tweaking-Parameter eingeht. Diese Tweaking-Parameter dienen primär dazu, effizientere Authenticated Encryption-Betriebsmodi zu realisieren. Bei einigen Betriebsmodi einer regulären Blockchiffre kann ein IV-Wert (Initialisierungsvektor) berücksichtigt werden, der beispielsweise Informationen wie eine Netzwerkadresse umfassen kann.

Darüber hinaus können bei einer Schlüsselableitung (Key Derivation) Parameter, wie ein Netzwerkname, zur Erzeugung eines abgeleiteten Schlüssels genutzt werden. Insgesamt sind zahlreiche Ansätze bekannt, um Varianten eines Verschlüsselungsalgorithmus abhängig von einem Parameter zu bilden. Allerdings ist eine Kommunikationsteilnehmer-seitige Spezifikation eines solchen Parameters bisher nicht vorgesehen. Eine Anpassung eines Verschlüsselungsalgorithmus zur Minimierung von Angriffsmöglichkeiten erfordert damit umfangreiches Know-how, über das nicht jeder Nutzer verfügt.

Der vorliegenden Erfindung liegt daher die Aufgabe zugrunde, ein gegenüber automatisierten Angriffen robustes Verfahren zur kryptographisch gesicherten Datenübermittlung zwischen Kommunikationsteilnehmern, insbesondere zum Austausch zeitkritischer Daten innerhalb eines industriellen Automatisierungssystems, zu schaffen, das eine einfache und flexible Individualisierung von genutzten Kryptographie-Algorithmen ermöglicht, und eine geeignete Vorrichtung zur technischen Realisierung des Verfahrens anzugeben.

Diese Aufgabe wird erfindungsgemäß durch ein Verfahren mit den in Patentanspruch 1 angegebenen Merkmalen und durch ein Kommunikationsgerät mit den in Patentanspruch 11 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur kryptographisch gesicherten Datenübermittlung zwischen Kommunikationsteilnehmern authentisieren sich die Kommunikationsteilnehmer vor einem Aufbau einer Sitzung und erstellen gemeinsam einen kryptographischen Sitzungsschlüssel oder nutzen einen vorab bereitgestellten kryptographischen Sitzungsschlüssel. Die Kommunikationsteilnehmer können sich beispielsweise direkt gegenüber zumindest dem jeweils anderen Kommunikationsteilnehmer oder gegenüber einem Authentisierungsserver authentisieren. Dementsprechend kann der Sitzungsschlüssel vorteilhafterweise zwischen den Kommunikationsteilnehmern vereinbart oder durch den Authentisierungsserver vorgegeben werden. Falls die Datenübermittlung unter mehr als zwei Kommunikationsteilnehmern erfolgt, ist der Sitzungsschlüssel vorzugsweise ein Gruppenschlüssel, wobei der Authentisierungsserver insbesondere ein Group-Key-Management-Server ist, der den Gruppenschlüssel bereitstellt. Weiterhin kann beim Aufbau der Sitzung ein von den Kommunikationsteilnehmern gemeinsam unterstütztes Verschlüsselungsverfahren, insbesondere eine Cipher Suite, ausgewählt werden. Beispiele für eine Cipher Suite sind AES-GCM, AES-CCM, TLS_ECDHE_ECDSA WITH AES 256_GCM SHA384, TLS_ECDHE_RSA_WITH_AES_128_CBC_SHA256 bzw. TLS_ECDHE_ECDSA_WITH_CHACHA20_POLY1305_SHA256.

Anhand des Sitzungsschlüssels wird erfindungsgemäß nach einer erfolgreichen Authentifizierung der Kommunikationsteilnehmer die Sitzung zwischen den Kommunikationsteilnehmern kryptographisch gesichert aufgebaut. Für ein innerhalb der Sitzung zu verwendendes Verschlüsselungsverfahren wird zwischen den Kommunikationsteilnehmern ein Verschlüsselungsparameter, insbesondere ein Krypto-Diversifikationsparameter, abgeglichen, anhand dessen eine kryptographische Verschlüsselungsfunktion des Verschlüsselungsverfahrens angepasst wird. Dabei ist der Verschlüsselungsparameter für jeden Kommunikationsteilnehmer vorkonfiguriert und innerhalb der Sitzung unveränderlich. Vorzugsweise sind die Verschlüsselungsparameter nur nach erfolgreicher Nutzer-Authentisierung und -Berechtigungsprüfung auf den Kommunikationsteilnehmern jeweils zugeordneten Kommunikationsgeräten konfigurierbar bzw. änderbar.

Abhängig vom Verschlüsselungsparameter, insbesondere abhängig vom Krypto-Diversifikationsparameter, kann eine dafür spezifische Block-Chiffre-Variante oder Strom-Chiffre-Variante - also eine für den jeweiligen Verschlüsselungsparameter bzw. Krypto-Diversifikationsparameter spezifische kryptographische Algorithmus-Variante - festgelegt werden. Diese spezifische kryptographische Algorithmus-Variante wird für das innerhalb der Sitzung verwendete Verschlüsselungsverfahren zwischen den Kommunikationsteilnehmern unter Nutzung des zwischen den Kommunikationsteilnehmern vereinbarten bzw. eingerichteten kryptographischen Sitzungsschlüssel verwendet. Dies hat den Vorteil, dass die vom Verschlüsselungsverfahren verwendete kryptographische Algorithmus-Variante und damit auch das Verschlüsselungsverfahren abhängig vom Verschlüsselungsparameter bzw. Krypto-Diversifikationsparameter angepasst wird. Ein Verschlüsselungsverfahren, insbesondere eine Cipher Suite, kann mehrere kryptographische Algorithmen in Kombination verwenden, z.B. einen ersten kryptographischen Algorithmus zur Nutzdatenverschlüsselung und einen zweiten kryptographischen Algorithmus zum kryptographischen Schutz von Nutzdatenintegrität und Nutzdatenauthentizität. Es ist jedoch auch möglich, einen kombinierten kryptographischen Algorithmus zu verwenden, was auch als authentisierte Verschlüsslung (Authenticated Encryption) bezeichnet werden kann. Der Verschlüsselungsparameter bzw. Krypto-Diversifikationsparameter kann insbesondere den für die Nutzdatenverschlüsselung verwendeten kryptographischen Algorithmus bzw. den für den kryptographischen Schutz der Nutzdatenintegrität und Nutzdatenauthentizität verwendeten kryptographischen Algorithmus bzw. einen für eine authentisierende Verschlüsselung verwendeten kryptographischen Algorithmus betreffen. Es kann damit eine spezifische kryptographische Algorithmus-Variante abhängig vom Verschlüsselungsparameter bzw. Krypto-Diversifikationsparameter festgelegt werden. Bei Verwendung mehrerer kryptographischer Algorithmen, insbesondere für die Nutzdatenverschlüsselung und für den kryptographischen Schutz der Nutzdatenintegrität und Nutzdatenauthentizität, in einem Verschlüsselungsverfahren kann dafür ein gemeinsamer Verschlüsselungsparameter bzw. Krypto-Diversifikationsparameter verwendet werden, oder es können mehrere für den jeweiligen kryptographischen Algorithmus des Verschlüsselungsverfahrens spezifische Verschlüsselungsparameter bzw. Krypto-Diversifikationsparameter verwendet werden.

Bei einem Abgleich des Verschlüsselungsparameters wird erfindungsgemäß überprüft, ob dieser für die Kommunikationsteilnehmer identisch vorkonfiguriert ist. Bei identischer Vorkonfigurierung wird der Verschlüsselungsparameter zur Anpassung des Verschlüsselungsverfahrens übernommen, und zwischen den Kommunikationsteilnehmern innerhalb der Sitzung übermittelte Daten werden entsprechend dem angepassten Verschlüsselungsverfahren kryptographisch gesichert. Bei unterschiedlichen vorkonfigurierten Verschlüsselungsparametern wird dagegen wird die Sitzung beendet bzw. der Aufbau der Sitzung abgebrochen.

Mit der vorliegenden Erfindung können Anwender, wie Betreiber von industriellen Automatisierungssystemen oder Systemintegratoren, auf einfache und zuverlässige Weise ein kryptographisch diversifiziertes Verschlüsselungsverfahren einsetzen, ohne selbst umfassendes kryptographisches Know-how hierfür zu benötigen. Insbesondere kann ein anwenderseitiges Setzen des diversifizierenden Verschlüsselungsparameters durch einen Gerätehersteller, der über notwendiges kryptographisches Know-how verfügt, vorbereitet bzw. umgesetzt werden. Darüber hinaus kann das Verschlüsselungsverfahren anwenderseitig unabhängig von eigentlichen kryptographischen Schlüsseln konfiguriert werden, so dass Rückwirkungen bei Nutzung des erfindungsmäßen Verfahrens auf andere relevante Aspekte minimal sind.

Entsprechend einer bevorzugten Ausgestaltung der vorliegenden Erfindung werden die Verschlüsselungsparameter bzw. Krypto-Diversifikationsparameter durch ein Engineering-System auf den Kommunikationsteilnehmern jeweils zugeordneten Kommunikationsgeräten konfiguriert. Insbesondere kann durch das Engineering-System mittels der Verschlüsselungsparameter vorgegeben werden, zwischen welchen Kommunikationsteilnehmern eine verschlüsselte Kommunikation vorgesehen bzw. zulässig ist. Auf diese Weise kann mit hoher Verlässlichkeit sichergestellt werden, dass eine Datenübertragung nur zwischen vorgesehenen Kommunikationspartnern möglich ist. Außerdem können Angriffsmöglichkeiten durch eine Diversifikation der jeweils verwendeten Verschlüsselungsparameter reduziert werden. Somit können mögliche Schäden dementsprechend begrenzt werden, die beispielsweise bei einer fehlerhaften Konfiguration oder bei Verlust von Authentisierungscredentials entstehen könnten.

Vorteilhafterweise werden die Verschlüsselungsparameter bzw. Krypto-Diversifikationsparameter auf den Kommunikationsteilnehmern jeweils zugeordneten Kommunikationsgeräten nur über eine lokale Schnittstelle am jeweiligen Kommunikationsgerät konfiguriert bzw. geändert. Dadurch kann mit hoher Verlässlichkeit verhindert werden, dass ein Verschlüsselungsparameter bzw. Krypto-Diversifikationsparameter bei einem Angriff auf ein Gerät modifiziert werden kann, beispielsweise über ein Remote Device Management Protocol, wie SSH, NETCONF/YANG, RESTCONF/YANG, SNMP oder OMA Device Management (Open Mobile Alliance). Die lokale Schnittstelle kann beispielsweise als eine serielle Schnittstelle, z.B. RS232 oder USB oder SPI, realisiert sein. Ebenso ist möglich, die lokale Schnittstelle als Netzwerkschnittstelle, z.B. Ethernet, vorzusehen, wobei jedoch vom Gerät eine Konfiguration beziehungsweise Änderung des Verschlüsselungsparameters bzw. Krypto-Diversifikationsparameters über eine direkte, nicht-geroutete, d.h. Link-lokale, Netzwerkverbindung erfolgen sollte. Dazu kann das Gerät beispielsweise prüfen, ob eine Link-lokale IP-Adresse verwendet wird, oder es kann einen Hop-Count eines IP-Pakets prüfen. Dies hat den Vorteil, dass zwar ein Remote Device Management Protocol für eine Konfiguration beziehungsweise Änderung des Verschlüsselungsparameters bzw. Krypto-Diversifikationsparameters verwendet wird, dies aber nur lokal, d.h. in Gerätenähe, möglich ist.

Entsprechend einer weiteren vorteilhaften Ausgestaltung der vorliegenden Erfindung werden die Verschlüsselungsparameter bzw. Krypto-Diversifikationsparameter auf den Kommunikationsteilnehmern jeweils zugeordneten Kommunikationsgeräten über eine erste Schnittstelle auf dem jeweiligen Kommunikationsgerät konfiguriert bzw. geändert. Demgegenüber werden den Kommunikationsteilnehmern zugeordnete Authentisierungsnachweise, insbesondere Nutzer-Zertifikate, über eine von der ersten Schnittstelle verschiedene zweite Schnittstelle auf dem jeweiligen Kommunikationsgerät eingerichtet. Dies bewirkt, dass Verschlüsselungsparameter bzw. Krypto-Diversifikationsparameter einerseits und Authentisierungscredentials andererseits nur unabhängig voneinander eingerichtet werden können, was Angriffsmöglichkeiten weiter reduziert.

Vorzugsweise wird bei einer Authentisierung eines Kommunikationsteilnehmers bzw. bei einer Vereinbarung des Sitzungsschlüssels zumindest einem jeweils anderen Kommunikationsteilnehmer signalisiert, dass innerhalb der Sitzung zwischen den Kommunikationsteilnehmern übermittelte Daten entsprechend einem Verschlüsselungsverfahren mit einer auf Basis des Verschlüsselungsparameters bzw. Krypto-Diversifikationsparameters angepassten Verschlüsselungsfunktion kryptographisch gesichert werden. Dies hat den Vorteil, dass bereits bei der Authentisierung und Schlüsselvereinbarung erkannt werden kann, wenn bei einem anderen Kommunikationsteilnehmer ein unterschiedlicher Verschlüsselungsparameter bzw. Krypto-Diversifikationsparameter eingerichtet ist. Grundsätzlich ist es auch möglich, eine spezielle Cipher Suite für eine diversifizierbare Verschlüsselung zu definieren. Vorteilhafterweise wird der Verschlüsselungsparameter bzw. eine über den Verschlüsselungsparameter berechnete Prüfsumme an den jeweils anderen Kommunikationsteilnehmer übermittelt bzw. diesem angezeigt. Auf diese Weise wird Transparenz hinsichtlich des jeweils konfigurierten Verschlüsselungsparameters hergestellt.

Das erfindungsgemäße Kommunikationsgerät, insbesondere ein Endgerät oder ein Vorschaltgerät für ein Endgerät, ist zur Durchführung eines Verfahrens entsprechend vorangehenden Ausführungen vorgesehen und dafür eingerichtet, einen Kommunikationsteilnehmer, dem das Kommunikationsgerät zugeordnet ist, vor einem Aufbau einer Sitzung zu authentisieren und gemeinsam mit zumindest einem anderen Kommunikationsteilnehmer einen kryptographischen Sitzungsschlüssel zu erstellen oder einen vorab bereitgestellten kryptographischen Sitzungsschlüssel zu nutzen. Außerdem ist das Kommunikationsgerät dafür eingerichtet, anhand des Sitzungsschlüssels nach einer erfolgreichen Authentifizierung der Kommunikationsteilnehmer die Sitzung zwischen den Kommunikationsteilnehmern kryptographisch gesichert aufzubauen und für ein innerhalb der Sitzung zu verwendendes Verschlüsselungsverfahren zwischen den Kommunikationsteilnehmern einen Verschlüsselungsparameter abzugleichen. Anhand dieses Verschlüsselungsparameters erfolgt eine Anpassung einer kryptographischen Verschlüsselungsfunktion des Verschlüsselungsverfahrens, wobei der Verschlüsselungsparameter vorkonfiguriert und innerhalb der Sitzung unveränderlich ist.

Darüber hinaus ist das erfindungsgemäße Kommunikationsgerät dafür eingerichtet, bei einem Abgleich des Verschlüsselungsparameters zu überprüfen, ob dieser für die Kommunikationsteilnehmer identisch vorkonfiguriert ist, und den Verschlüsselungsparameter bei identischer Vorkonfigurierung zur Anpassung des Verschlüsselungsverfahrens zu übernehmen und zwischen den Kommunikationsteilnehmern innerhalb der Sitzung übermittelte Daten entsprechend dem angepassten Verschlüsselungsverfahren kryptographisch zu sichern. Des Weiteren ist das Kommunikationsgerät dafür eingerichtet, die Sitzung bei unterschiedlichen vorkonfigurierten Verschlüsselungsparametern zu beenden oder den Aufbau der Sitzung abzubrechen.

Die vorliegende Erfindungsmeldung wird nachfolgend an einem Ausführungsbeispiel anhand der Zeichnung näher erläutert. Es zeigt
- Figur 1: eine Darstellung eines industriellen Automatisierungssystem, das über Sensoren und Aktuatoren mit einer realen, physikalischen Umgebung interagiert,
- Figur 2: eine in ein Endgerät integrierbare Kommunikationskomponente für eine anwender-diversifizierte verschlüsselte Datenübertragung,
- Figur 3: ein mit einem Endgerät verbindbares Vorschaltgerät mit zwei Netzwerkschnittstellen für eine anwender-diversifizierte verschlüsselte Datenübertragung.

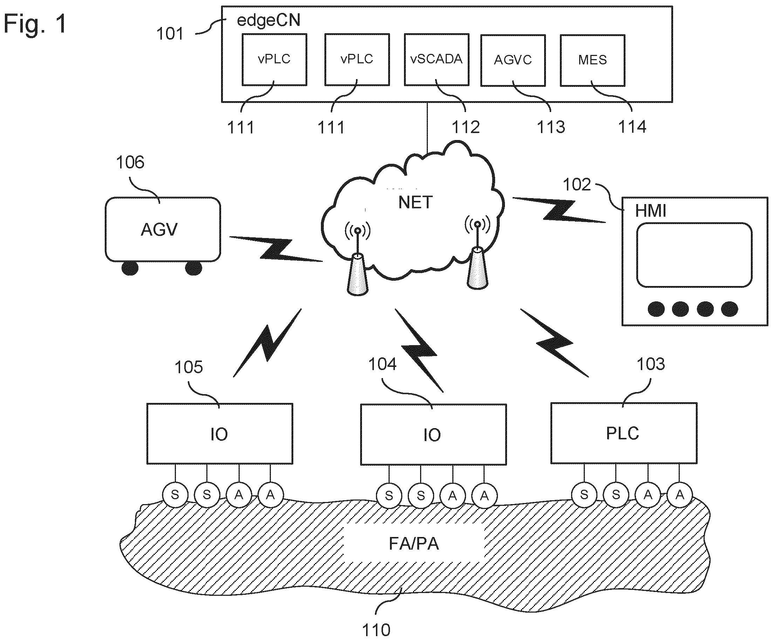

Das in Figur 1 dargestellte industrielle Automatisierungssystem umfasst einen als Edge Computing Node ausgestalteten Host 101, eine Bedien- und Beobachtungsstation bzw. ein HMI-Panel 102, eine speicherprogrammierbare Steuerung (SPS) 103, mehrere Eingabe-/Ausgabe-Geräte bzw. IO-Module (Input/Output) 104-105 und ein fahrerloses Fahrzeug 106. Der Host 101, die Bedien- und Beobachtungsstation 102, die SPS 103, die IO-Module 104-105 und das fahrerlose Fahrzeug 106 sind über ein Kommunikationsnetz 100 miteinander verbunden. Dabei sind die SPS 103, die IO-Module 104-105 und das fahrerlose Fahrzeug 106 drahtlos an das Kommunikationsnetz 100 angebunden, beispielsweise per Industrial WLAN oder 5G-Kommunikation. Grundsätzlich kann auch drahtgebunden kommuniziert werden, beispielsweise per (Echtzeit-)Ethernet, insbesondere PROFINET oder TSN (Time-Sensitive Networking). Eine Übertragung von Steuerungsdaten, Überwachungsdaten, Konfigurationsdaten, Managementdaten erfolgt im vorliegenden Ausführungsbeispiel über verschlüsselte Kommunikationsverbindungen. Dazu kann insbesondere TLS, QUIC oder OPC UA Secure Channel verwendet werden. Weiterhin kann MACsec, IPsec oder eine Funkkanalverschlüsselung, z.B. bei WLAN oder 5G verwendet werden.

Die SPS 103 und die IO-Module 104-105 umfassen jeweils mehrere an ein zu steuerndes bzw. zu regelndes technisches System 110 angebundene Sensoren S und Aktoren A. Das technische System 110 kann beispielsweise eine Fertigungsanlage oder eine verfahrenstechnische Anlage sein. Die Bedien- und Beobachtungsstation 102 dient zur Visualisierung von Prozessdaten bzw. Mess- und Steuerungsgrößen, die durch speicherprogrammierbare Steuerungen, Eingabe/Ausgabe-Einheiten, Sensoren oder Aktoren verarbeitet bzw. erfasst werden. Insbesondere kann die Bedien- und Beobachtungsstation 102 zur Anzeige von Werten eines Regelungskreises und zur Veränderung von Regelungsparametern verwendet werden.

Der Host 101 umfasst im vorliegenden Ausführungsbeispiel eine Container-Laufzeitumgebung, mittels derer eine Vielzahl virtualisierter Steuerungsanwendungen 111-114 bereitgestellt werden können, beispielsweise für virtuelle speicherprogrammierbare Steuerungen 111, für ein virtuelles SCADA-System 112 (Supervisory Control and Data Acquisition), für einen virtuellen Controller 113 für fahrerlose Fahrzeuge oder für ein virtuelles Manufacturing Execution System 114. Mittels der virtuellen speicherprogrammierbaren Steuerungen 111 können insbesondere die IO-Module 104-105 gesteuert bzw. überwacht werden.

Die virtualisierten Steuerungsanwendungen 111-114 werden anhand von Containern, beispielsweise Docker oder Linux Container, bereitgestellt, die in die Container-Laufzeitumgebung ladbar und dort ausführbar sind. Die Container laufen innerhalb der Container-Laufzeitumgebung isoliert voneinander ab und nutzen gemeinsam einen Betriebssystemkern des Host 100 sowie physische oder virtuelle Netzwerkressourcen des Host 100, insbesondere einen Netzwerkadapter. Alternativ zu Containern können die virtualisierten Steuerungsanwendungen 111-114 beispielsweise auch mittels virtueller Maschinen oder WebAssembly- oder Java Bytecode bereitgestellt werden. Dementsprechend kann alternativ zur Container-Laufzeitumgebung ein Hypervisor, eine Web-Assembly-Laufzeitumgebung oder eine Java Virtual Machine im Host 101 vorgesehen sein.

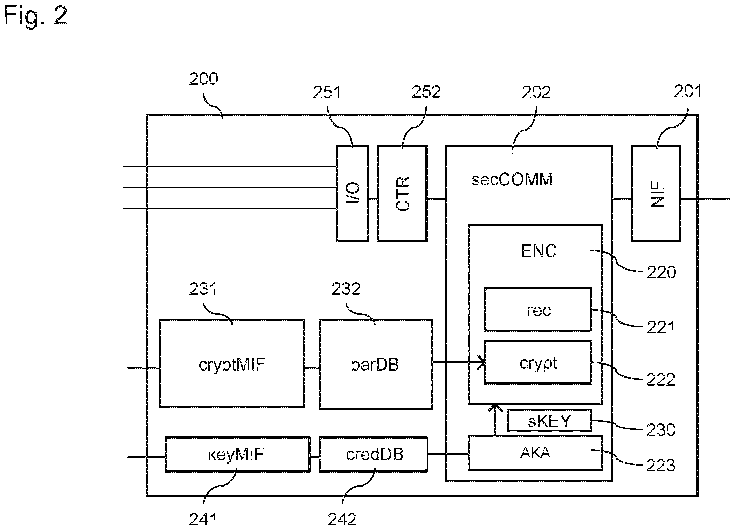

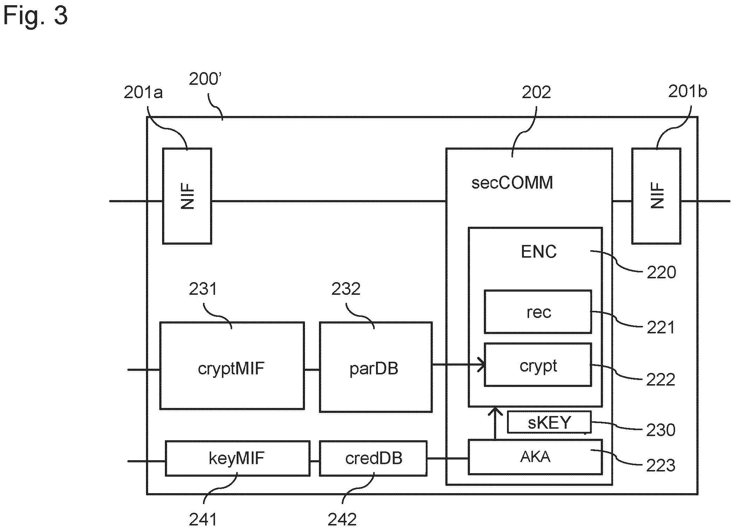

Zur verschlüsselten Datenübertragung können insbesondere die SPS 103, die IO-Module 104-105 und das fahrerlose Fahrzeug 106 jeweils die in Figur 2 dargestellte integrierte Kommunikationskomponente 200 für eine anwender-diversifizierte verschlüsselte Datenübertragung umfassen. Als Alternative zu einer integrierten Lösung können beispielsweise der Host 101 und die Bedien- und Beobachtungsstation 102 jeweils mit dem in Figur 3 dargestellten, im Wesentlichen funktionsgleichen Vorschaltgerät 200' verbunden werden. Während die integrierte Kommunikationskomponente 200 nur eine Netzwerkschnittstelle 201 aufweist, umfasst das Vorschaltgerät 200' eine erste geräteseitige Netzwerkschnittstelle 201a und eine zweite netzseitige Netzwerkschnittstelle 201b. Lediglich die integrierte Kommunikationskomponente 200 umfasst eine IO-Schnittstelle 251 zur Entgegennahme zu übermittelnder Sensor- bzw. Aktor-Daten und eine zugeordnete Controller-Einheit 252, die zur Weiterleitung der Sensor- bzw. Aktor-Daten mit einer Funktionseinheit 202 zur sicheren Kommunikation verbunden ist. Beim Vorschaltgerät 200' ist die Funktionseinheit 202 zur sicheren Kommunikation stattdessen mit der ersten geräteseitigen Netzwerkschnittstelle 201a verbunden. Darüber hinaus ist die die Funktionseinheit 202 zur sicheren Kommunikation mit der zweiten netzseitigen Netzwerkschnittstelle 201b des Vorschaltgeräts 200' bzw. mit der Netzwerkschnittstelle 201 der integrierten Kommunikationskomponente 200 verbunden. Ansonsten bestehen zwischen der integrierten Kommunikationskomponente 200 und dem Vorschaltgerät 200' keine weiteren Unterschiede. Nachfolgende Ausführungen gelten daher für beide Varianten.

Die Funktionseinheit 202 zur sicheren Kommunikation umfasst eine Verschlüsselungseinheit 220 mit einer anhand eines Krypto-Diversifikationsparameters anpassbaren Verschlüsselungsfunktion 222 sowie mit einer Schnittstelle 221 (Record Layer) zur Entgegennahme unverschlüsselter Daten und deren Weiterleitung an die Verschlüsselungsfunktion 222. Die Verschlüsselungsfunktion 222 liest den Krypto-Diversifikationsparameter aus einer dedizierten Speichereinheit 232 für Krypto-Diversifikationsparameter aus. Diese Speichereinheit 232 ist ausschließlich über eine dedizierte Management-Schnittstelle 231 für Krypto-Diversifikationsparameter beschreibbar. Darüber hinaus umfassen sowohl die integrierte Kommunikationskomponente 200 als auch das Vorschaltgerät 200' eine Funktionseinheit 223 (Authentication and Key Agreement) zur Bereitstellung von kryptographischen Sitzungsschlüsseln 230. Dabei kann die Funktionseinheit 223 zur Authentisierung und zur mit anderen Kommunikationsteilnehmern gemeinsamen Erzeugung des Sitzungsschlüssels 230 auf in einer dedizierten Credential-Speichereinheit 242 gespeicherte Zertifikate oder kryptographische Schlüssel zugreifen. Für einen Schreib-Zugriff auf die Credential-Speichereinheit 242 ist eine separate Credential-Management-Schnittstelle 241 vorgesehen. Auf diese Weise wird ein Schreib-Zugriff auf die Speichereinheit 232 für Krypto-Diversifikationsparameter und auf die Credential-Speichereinheit 242 über dieselbe Management-Schnittstelle verhindert.

Insgesamt sind sowohl die integrierte Kommunikationskomponente 200 als auch das Vorschaltgerät 200' jeweils dafür eingerichtet, einen zugeordneten Kommunikationsteilnehmer, vor einem Aufbau einer Sitzung zu authentisieren und gemeinsam mit zumindest einem anderen Kommunikationsteilnehmer einen Sitzungsschlüssel 230 zu erstellen, beispielsweise entsprechend TLS, DTLS, QUIC, OPC UA Secure Channel; IPsec/IKEv2, oder einen vorab bereitgestellten Sitzungsschlüssel 230 zu nutzen. Eine Bereitstellung des Sitzungsschlüssels 230 kann insbesondere mittels eines Authentisierungsservers, z.B. AAA Server oder RADIUS/DIAMETER Server, erfolgen, der einen ersten Kommunikationsteilnehmer authentisiert, den Sitzungsschlüssel ermittelt und dem anderen Kommunikationsteilnehmer bereitstellt, beispielsweise entsprechend EAP-TLS oder EAP-PEAP bei WLAN oder entsprechend MACsec, 5G SNPN; 5G AKA oder EAP-AKA bei 5G-Mobilfunknetzen. Grundsätzlich kann eine Datenübermittlung unter mehr als zwei Kommunikationsteilnehmern erfolgen. In diesem Fall ist der Sitzungsschlüssel 230 ein Gruppenschlüssel, und der Authentisierungsserver ist ein Group-Key-Management-Server, der den Gruppenschlüssel bereitstellt, beispielsweise mittels GDOI (siehe auch https://datatracker.ietf.org/doc/html/rfc6407).

Nach einer erfolgreichen Authentifizierung der Kommunikationsteilnehmer wird die Sitzung zwischen den Kommunikationsteilnehmern anhand des Sitzungsschlüssels 230 kryptographisch gesichert aufgebaut. Für ein innerhalb der Sitzung zu verwendendes Verschlüsselungsverfahren wird der Krypto-Diversifikationsparameter, anhand dessen die Verschlüsselungsfunktion 222 angepasst wird, zwischen den Kommunikationsteilnehmern abgeglichen. Grundsätzlich ist der Krypto-Diversifikationsparameter für jeden Kommunikationsteilnehmer vorkonfiguriert und innerhalb der Sitzung unveränderlich. Vorzugsweise ist der Krypto-Diversifikationsparameter nur nach erfolgreicher Nutzer-Authentisierung und -Berechtigungsprüfung konfigurierbar bzw. änderbar. Während des Aufbaus der Sitzung können die Kommunikationsteilnehmer zusätzlich zum Krypto-Diversifikationsparameter und optional eine Cipher Suite vereinbaren.

Bei einem Abgleich des Krypto-Diversifikationsparameters wird überprüft, ob dieser für die Kommunikationsteilnehmer identisch vorkonfiguriert ist. Sowohl die integrierte Kommunikationskomponente 200 als auch das Vorschaltgerät 200' sind jeweils dafür eingerichtet, den Krypto-Diversifikationsparameter bei identischer Vorkonfigurierung zur Anpassung des Verschlüsselungsverfahrens zu übernehmen und zwischen den Kommunikationsteilnehmern innerhalb der Sitzung übermittelte Daten entsprechend dem über den Krypto-Diversifikationsparameter angepassten Verschlüsselungsverfahren kryptographisch zu sichern. Bei unterschiedlichen vorkonfigurierten Verschlüsselungsparametern wird die Sitzung beendet bzw. der Aufbau der Sitzung abgebrochen.

Entsprechend obigen Ausführungen erfolgt zwischen Kommunikationsteilnehmern eine Anpassung einer Verschlüsselung von Anwenderdaten abhängig von einem Anwenderkonfigurierbaren Krypto-Diversifikationsparameter. Die Verschlüsselung erfolgt also nicht nur abhängig von für eine Authentisierung und Schlüsselvereinbarung verwendeten Schlüsseln und einem sich daraus ergebenden Sitzungsschlüssel. Insbesondere ist eine verschlüsselte Datenübertragung nur dann zwischen den Kommunikationsteilnehmern möglich, wenn bei ihnen übereinstimmende Krypto-Diversifikationsparameter eingerichtet sind. Dadurch kann mit hoher Verlässlichkeit sichergestellt werden, dass eine Datenübertragung nur zwischen vorgesehenen Kommunikationsteilnehmern möglich ist. Weiterhin kann durch eine Diversifikation eine reduzierte Angriffsoberfläche werden, wobei mögliche Schäden begrenzt werden, die bei einer fehlerhaften Konfiguration oder bei einem Verlust zur Authentisierung und Schlüsselvereinbarung verwendeter Authentisierungscredentials entstehen können. Weiterhin können dadurch Seitenkanalangriffe erschwert werden.

Wenn beispielsweise bei einer flexibel rekonfigurierbaren Produktion (Industrie 4.0) oder wegen Umsetzung eines Zero-Trust-Security-Ansatzes eine Filterung von Datenkommunikation an Netzwerkgrenzen in immer geringerem Umfang oder gar nicht erfolgt, so kann mit vorangehend beschriebenen Konzept dennoch gewährleistet werden, dass nur Automatisierungsgeräte bzw. Kommunikationsteilnehmer einer vorgesehenen gemeinsamen virtuellen Zone miteinander verschlüsselt kommunizieren können. Je nach konkreter, nachfolgend beschriebener technischer Umsetzung einer Kryptodiversifikation bei einer Verschlüsselung zu übertragender Daten kann häufig die Angriffsoberfläche reduziert werden, da unterschiedliche, anwenderspezifische Kryptographievarianten zur Anwendung kommen, sodass ein erfolgreicher Angriff mittels vorbereiteter fester Exploits verhindert oder zumindest erschwert wird.

Der Krypto-Diversifikationsparameter kann insbesondere abhängig von folgenden Kriterien gewählt und eingerichtet werden:
- Betreiber eines Automatisierungssystems (Identifier oder Name),
- Standort, an dem sich das Automatisierungssystem befindet,
- Security-Zone eines Automatisierungsgeräts bzw. Kommunikationsteilnehmers nach IEC62443,
- Security-Level des Automatisierungsgeräts bzw. Kommunikationsteilnehmers nach IEC62443,
- Sicherheitsanforderungsstufe (Safety Integrity Level),
- Echtzeit- oder Nicht-Echtzeit-Kommunikation,
- Art der Kommunikation, etwa Diagnosekommunikation oder Steuerungskommunikation.

Der Krypto-Diversifikationsparameter kann vorzugsweise in Form einer Zeichenfolge (String), alternativ auch als Bitfolge oder als Dezimalwert oder als Hexadezimalwert eingerichtet werden. Die verschlüsselte Datenübertragung kann außerdem eine Authenticated Encryption sein, also eine Verschlüsselung, bei der übertragene Daten auch hinsichtlich ihrer Integrität kryptographisch geschützt sind. Darüber hinaus kann vorgesehen sein, dass der Krypto-Diversifikationsparameter nur einmalig gesetzt wird (Sealing des Krypto-Diversifikationsparameters) und danach entweder gar nicht oder nur durch ein Factory Reset zurückgesetzt werden kann. Entsprechend einer weiteren Ausführungsvariante kann vorgesehen sein, dass der Krypto-Diversifikationsparameter nur über eine Geräte-lokale Schnittstelle gesetzt oder geändert werden kann, nicht aber über ein Remote Device Management Protocol, wie SSH, NETCONF/YANG, RESTCONF/YANG, SNMP oder OMA Device Management (Open Mobile Alliance). Dadurch kann mit hoher Verlässlichkeit verhindert werden, dass der Krypto-Diversifikationsparameter bei einem Angriff auf ein Gerät modifiziert werden kann. Vorzugsweise wird der Krypto-Diversifikationsparameter nur lokal auf einem dem jeweiligen Kommunikationsteilnehmer zugeordneten Gerät, z.B. Kommunikationsgerät, loT-Gerät, Steuergerät, Kommunikationsprozessor, eingerichtet (konfiguriert und gespeichert). Auf diese Weise können Manipulationsmöglichkeiten weiter reduziert werden.

Darüber hinaus ist es in einem 5G-Mobilfunksystem möglich, dass der Krypto-Diversifikationsparameter für einen Mobilfunkteilnehmer im UDM (Unified Data Management) hinterlegt ist. Dabei kann der Krypto-Diversifikationsparameter vorzugsweise über eine Network Exposure Schnittstelle NEF des Mobilfunksystems für einen einzelnen Mobilfunkteilnehmer oder eine Gruppe von Mobilfunkteilnehmern gesetzt bzw. geändert werden. Dieser Krypto-Diversifikationsparameter kann beispielsweise von einem Betreiber eines Automatisierungssystems gesetzt werden und kommt als zusätzlicher Sicherheitsparameter zur Anwendung, wenn ein Sitzungsschlüssel für eine Mobilfunkverschlüsselung ermittelt wird oder wenn die Mobilfunkverschlüsselung erfolgt. Falls ein allgemeines oder öffentliches 5G-Mobilfunknetzwerk eines 5G-Mobilfunkproviders als Grundlage für ein Kommunikationsnetz eines Automatisierungssystems verwendet wird, z.B. per Closed Access Group oder Network Slicing, so kann der Betreiber des Automatisierungssystems über den Krypto-Diversifikationsparameter Einfluss auf die Verschlüsselung innerhalb des 5G-Mobilfunksystems nehmen. Der Krypto-Diversifikationsparameter kann auch als OT-Operator-configurable Crypto Algorithm Variant Parameter bezeichnet werden, da er einem OT-Betreiber (Operational Technology) bzw. einem Betreiber eines Automatisierungssystems ermöglicht, eine für ihn spezifische Variante der Verschlüsselung einzurichten.

Der Krypto-Diversifikationsparameter kann auf unterschiedliche Art die Verschlüsselung modifizieren:
- Nutzung eines Verschlüsselungsalgorithmus, bei dem bereits im Design eine Diversifikation vorgesehen ist.
- Bei einer rundenbasierten Blockchiffre erfolgt eine Zusatzrunde abhängig vom Krypto-Diversifikationsparameter, vorzugsweise am Anfang bzw. Ende einer rundenbasierten

Blockchiffre. Beispielsweise kann bei AES eine zusätzliche Runde berechnet werden, in die der Krypto-Diversifikationsparameter eingeht.
- Ermitteln eines Initialisierungsvektor-Werts abhängig vom konfigurierten Krypto-Diversifikationsparameter bei einem Betriebsmodus einer Blockchiffre, die einen Initialisierungsvektor verwendet, beispielsweise im CTR-Mode oder GCM-Mode. Es kann insbesondere ein Teilbereich bzw. ein Teil der Bits des Initialisierungsvektors abhängig vom konfigurierten Krypto-Diversifikationsparameter festgelegt werden.
- Verwendung des Krypto-Diversifikationsparameters als Tweaking-Parameter einer Tweakable Block Cipher.
- Zusätzlicher Schlüsselableitungsparameter bei einer Schlüsselableitung durch eine Key Derivation Function (KDF) bei der Authentisierung und Schlüsselvereinbarung. In die Schlüsselableitung des für die verschlüsselte Datenübertragung verwendeten Sitzungsschlüssels mittels einer KDF geht dabei der Krypto-Diversifikationsparameter als Schlüsselableitungsparameter ein. Beispielsweise würde der Krypto-Diversifikationsparameter bei TLS Key Schedule zusätzlich zu einem Pre-Shared Key und einem (Elliptic Curve)Diffie-Hellman Shared Secret als weiterer Schlüsselableitungsparameter in die Schlüsselableitung eingehen.
- Zusätzlicher Parameter bei einem Key Schedule einer Block Chiffre, bei der Rundenspezifische Rundenschlüssel ermittelt werden.
- Konstant-Parameter eines Kryptographie-Algorithmus, z.B. S-Box oder 3GPP-Kryptographieparameter.

Vorzugsweise wird bei der Authentisierung und Schlüsselvereinbarung dem jeweils anderen Kommunikationsteilnehmer signalisiert, dass eine Krypto-Diversifikation erfolgt. Dies kann eine Zusatzinformation sein, so dass definierte Cipher Suites weiterverwendet werden können. Beispielsweise können eine Basis-Cipher Suite und eine Diversifikation signalisiert werden. Es kann nicht nur signalisiert werden, dass eine Diversifikation erfolgt, sondern es kann auch der Krypto-Diversifikationsparameter oder ein Identifier oder eine Prüfsumme des Krypto-Diversifikationsparameters übermittelt werden. Dies hat den Vorteil, dass bereits bei der Authentisierung und Schlüsselvereinbarung erkannt werden kann, wenn bei den Kommunikationspartnern ein unterschiedlicher Krypto-Diversifikationsparameter eingerichtet ist. Es ist jedoch auch möglich, eine spezielle Cipher Suite für eine diversifizierbare Verschlüsselung zu definieren.

## Patentansprüche

1. Verfahren zur kryptographisch gesicherten Datenübermittlung zwischen Kommunikationsteilnehmern, bei dem
- die Kommunikationsteilnehmer (101-106) sich vor einem Aufbau einer Sitzung authentisieren und gemeinsam einen kryptographischen Sitzungsschlüssel (230) erstellen oder einen vorab bereitgestellten kryptographischen Sitzungsschlüssel nutzen,
- anhand des Sitzungsschlüssels (230) nach einer erfolgreichen Authentifizierung der Kommunikationsteilnehmer (101-106) die Sitzung zwischen den Kommunikationsteilnehmern kryptographisch gesichert aufgebaut wird,
- für ein innerhalb der Sitzung zu verwendendes Verschlüsselungsverfahren zwischen den Kommunikationsteilnehmern ein Verschlüsselungsparameter (232) abgeglichen wird, anhand dessen eine kryptographische Verschlüsselungsfunktion (222) des Verschlüsselungsverfahrens angepasst wird, wobei der Verschlüsselungsparameter für jeden Kommunikationsteilnehmer vorkonfiguriert und innerhalb der Sitzung unveränderlich ist,
- bei einem Abgleich des Verschlüsselungsparameters (232) überprüft wird, ob dieser für die Kommunikationsteilnehmer (101-106) identisch vorkonfiguriert ist,
- der Verschlüsselungsparameter (232) bei identischer Vorkonfigurierung zur Anpassung des Verschlüsselungsverfahrens übernommen wird und zwischen den Kommunikationsteilnehmern (101-106) innerhalb der Sitzung übermittelte Daten entsprechend dem angepassten Verschlüsselungsverfahren kryptographisch gesichert werden,
- die Sitzung bei unterschiedlichen vorkonfigurierten Verschlüsselungsparametern beendet oder der Aufbau der Sitzung abgebrochen wird.

2. Verfahren nach Anspruch 1,
bei dem sich die Kommunikationsteilnehmer (101-106) direkt gegenüber dem jeweils anderen Kommunikationsteilnehmer oder gegenüber einem Authentisierungsserver authentisieren und bei dem der Sitzungsschlüssel (230) zwischen den Kommunikationsteilnehmern vereinbart oder durch den Authentisierungsserver vorgegeben wird.

3. Verfahren nach Anspruch 2,
bei dem die Datenübermittlung unter mehr als zwei Kommunikationsteilnehmern (101-106) erfolgt, bei dem der Sitzungsschlüssel (230) ein Gruppenschlüssel ist und bei dem der Authentisierungsserver ein Group-Key-Management-Server ist, der den Gruppenschlüssel bereitstellt.

4. Verfahren nach einem der Ansprüche 1 bis 3,
bei dem die Verschlüsselungsparameter (232) durch ein Engineering-System auf den Kommunikationsteilnehmern (101-106) jeweils zugeordneten Kommunikationsgeräten konfiguriert werden.

5. Verfahren nach Anspruch 4,
bei dem durch das Engineering-System mittels der Verschlüsselungsparameter (232) vorgegeben wird, zwischen welchen Kommunikationsteilnehmern (101-106) eine verschlüsselte Kommunikation vorgesehen und/oder zulässig ist.

6. Verfahren nach einem der Ansprüche 1 bis 5,
bei dem die Verschlüsselungsparameter (232) nur nach erfolgreicher Nutzer-Authentisierung und -Berechtigungsprüfung auf den Kommunikationsteilnehmern (101-106) jeweils zugeordneten Kommunikationsgeräten konfigurierbar und/oder änderbar sind.

7. Verfahren nach einem der Ansprüche 1 bis 6,
bei dem die Verschlüsselungsparameter (232) auf den Kommunikationsteilnehmern (101-106) jeweils zugeordneten Kommunikationsgeräten nur über eine lokale Schnittstelle am jeweiligen Kommunikationsgerät konfiguriert und/oder geändert werden.

8. Verfahren nach einem der Ansprüche 1 bis 7,
bei dem die Verschlüsselungsparameter (232) auf den Kommunikationsteilnehmern (101-106) jeweils zugeordneten Kommunikationsgeräten über eine erste Schnittstelle (231) auf dem jeweiligen Kommunikationsgerät konfiguriert und/oder geändert werden und bei dem den Kommunikationsteilnehmern zugeordnete Authentisierungsnachweise (242), insbesondere Nutzer-Zertifikate, über eine von der ersten Schnittstelle verschiedene zweite Schnittstelle (242) auf dem jeweiligen Kommunikationsgerät eingerichtet werden.

9. Verfahren nach einem der Ansprüche 1 bis 8,
bei dem bei einer Authentisierung eines Kommunikationsteilnehmers und/oder bei einer Vereinbarung des Sitzungsschlüssels zumindest einem anderen Kommunikationsteilnehmer signalisiert wird, dass innerhalb der Sitzung zwischen den Kommunikationsteilnehmern übermittelte Daten entsprechend einem Verschlüsselungsverfahren mit einer auf Basis des Verschlüsselungsparameters angepassten Verschlüsselungsfunktion kryptographisch gesichert werden.

10. Verfahren nach Anspruch 9,
bei dem der Verschlüsselungsparameter und/oder eine über den Verschlüsselungsparameter berechnete Prüfsumme an den jeweils anderen Kommunikationsteilnehmer übermittelt und/oder diesem angezeigt wird.

11. Kommunikationsgerät zur Durchführung eines Verfahrens nach einem der Ansprüche 1 bis 10, wobei das Kommunikationsgerät dafür eingerichtet ist,
- einen Kommunikationsteilnehmer, dem das Kommunikationsgerät zugeordnet ist, vor einem Aufbau einer Sitzung zu authentisieren und gemeinsam mit zumindest einem anderen Kommunikationsteilnehmer einen kryptographischen Sitzungsschlüssel zu erstellen oder einen vorab bereitgestellten kryptographischen Sitzungsschlüssel zu nutzen,
- anhand des Sitzungsschlüssels nach einer erfolgreichen Authentifizierung der Kommunikationsteilnehmer die Sitzung zwischen den Kommunikationsteilnehmern kryptographisch gesichert aufzubauen,
- für ein innerhalb der Sitzung zu verwendendes Verschlüsselungsverfahren zwischen den Kommunikationsteilnehmern einen Verschlüsselungsparameter abzugleichen, anhand dessen eine Anpassung einer kryptographischen Verschlüsselungsfunktion des Verschlüsselungsverfahrens erfolgt, wobei der Verschlüsselungsparameter vorkonfiguriert und innerhalb der Sitzung unveränderlich ist,
- bei einem Abgleich des Verschlüsselungsparameters zu überprüfen, ob dieser für die Kommunikationsteilnehmer identisch vorkonfiguriert ist,
- den Verschlüsselungsparameter bei identischer Vorkonfigurierung zur Anpassung des Verschlüsselungsverfahrens zu übernehmen und zwischen den Kommunikationsteilnehmern innerhalb der Sitzung übermittelte Daten entsprechend dem angepassten Verschlüsselungsverfahren kryptographisch zu sichern,
- die Sitzung bei unterschiedlichen vorkonfigurierten Verschlüsselungsparametern zu beenden oder den Aufbau der Sitzung abzubrechen.
